(19) Europäisches Patentamt
European Patent Office
Office européen des brevets

(11) **EP 2 843 960 A1**

(12) **EUROPEAN PATENT APPLICATION**

(43) Date of publication:
04.03.2015 Bulletin 2015/10

(51) Int Cl.:
*H04N 21/431* (2011.01)   *H04N 21/84* (2011.01)

(21) Application number: 13181960.9

(22) Date of filing: 28.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• **Kamphenkel, Oliver**
  **31275 Lehrte (DE)**
• **Brune, Thomas**
  **30449 Hannover (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(54) **Method and apparatus for managing metadata of media data**

(57)     A method and an apparatus (10) for managing metadata associated to media data are described. The method comprises: displaying (22) a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

Fig. 3

**Description**

**FIELD OF THE INVENTION**

The present invention relates to a method and an apparatus for managing metadata associated to media data. The invention further relates to a computer readable medium suitable for such a method or apparatus for managing metadata.

**BACKGROUND OF THE INVENTION**

During the production of a media, such as a news video, a press report, a commercial, and a film, a tremendous amount of various types of media data are generated and subsequently edited. The management of the media data is thus essential and crucial for the production procedure and the efficiency thereof. One common approach for managing the media data is the utilization of metadata, which could be simply defined as data about data. A metadata item describes individual information of the media data or is a collection of varied information. In either way, the metadata facilitates the understanding, classification, and the management of media data. For example, in the context of film production where the media data are video shots, the metadata can include the date and time the shots are taken, the details about camera setting, the slate information about individual shots, or the combination of the above information. For a news video, the metadata can indicate the date and place the news happens, the person being interviewed in the news, the reporter of the news, etc.

For the metadata associated to media data, it is usual that the metadata is generated and managed based on a temporal or time-related order. Since various devices are preferably synchronized by a common timecode during the production of a media, the workflow of media production and thus the generation of metadata are strongly oriented to a temporal order. Therefore, a timeline is usually used to visualize the media data as well as the metadata for media post-production.

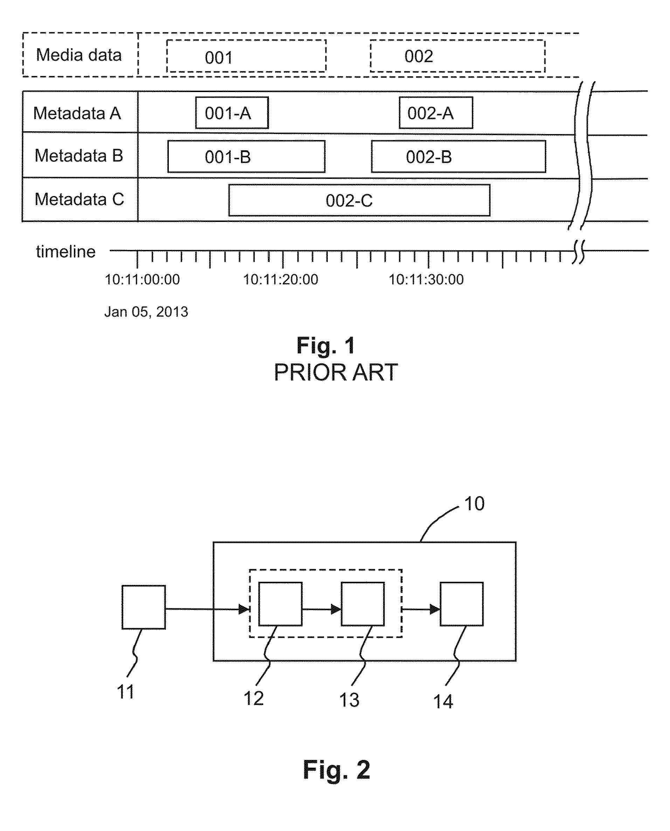

Figure 1 shows an example for the visual representation of metadata based on a temporal order. Each metadata item is represented by a graphical bar, and is marked with a notation relevant to the corresponding media data and to the specific type of metadata. For example, the metadata named "001-A" is the type A metadata for media data 001. Base on the temporal order, each item of the metadata is displayed corresponding to the timeline below. The horizontal length of the graphical bar of each metadata item refers to its time duration. Optionally, a similar representation for the original media data is displayed on top of the metadata for clarity. In the context of film production where the metadata are video shots (001, 002), the metadata A might be a slate report, the metadata B might be a camera metadata indicating camera setting details and having the same duration as the video shots, and the metadata C might be a complementary audio record.

Although this timeline view of the metadata reflects the temporal orientation of media production, there exist some practical disadvantages and inconvenience. First of all, it is not always necessary to review the temporal characteristic or timecode of each metadata item. For the purpose of getting an overview of all available metadata and of checking any item missing, one needs to know only the existence of the metadata rather than the temporal details thereof. Referring to the metadata C shown in Fig. 1, it is hard to notice the absence of metadata item "001-C" because the item "002-C" overlaps the time duration of both videos 001 and 002. When it comes to a huge amount of metadata spreading over a long period of time, the timeline view requires a large display space for the metadata representation while there is always an unavoidable limitation on the size of a computer monitor. The review of the metadata thus becomes burdensome. Moreover, the timeline view is not feasible for metadata without temporal characteristic, such as a film script based on which the video shots are taken.

**SUMMARY OF THE INVENTION**

It is an objective of the present invention to propose an improved solution for managing and displaying the metadata associated to media data.

According to a first aspect of the invention, a method for managing metadata associated to media data, where each item of the metadata being provided with at least one notation in accordance with a corresponding sample of the media data, comprises: displaying a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

Accordingly, an apparatus configured to manage metadata associated to media data, where each item of the metadata being provided with at least one notation in accordance with a corresponding sample of the media data, comprises: a displaying unit for displaying a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

Also, a computer readable medium has stored therein instructions for managing metadata associated to media data, which, when executed by a computer, cause the computer to: display a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

## BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:

Fig. 1 is a schematic diagram to illustrate a visual representation for metadata based on a temporal order.

Fig. 2is a schematic diagram to illustrate an apparatus implementing the method of managing metadata according to this invention.

Fig. 3is a flow chart illustrating a method according to this invention for managing metadata.

Fig. 4 is a schematic diagram to illustrate the first preferred embodiment of a method for managing metadata according to this invention.

Fig. 5is a schematic diagram to illustrate the second preferred embodiment of a method for managing metadata according to this invention.

Fig. 6is a schematic diagram to illustrate an exemplary for the slot structure of the second preferred embodiment shown in Fig. 5.

Fig. 7is a schematic diagram to illustrate the application of a method for managing metadata according to this invention for film production.

Fig. 8 is a schematic diagram to illustrate another example for the representation for the notation of metadata shown in Fig. 6.

## DETAILED DESCRIPTION OF PREFERED EMBODIMENTS

In the following the present invention shall be explained for the method and the apparatus for managing metadata associated to media data. It should be noted herein that like elements are denoted by the same reference numerals throughout the disclosure. As used herein, the terms "media data" and "metadata" describe, for example, video data, audio data, text data, files including multimedia streams, files including digital photos, or the combination thereof. It should be understood by one skilled in the art that media data and metadata can be referred to any type of data. Preferably, each sample of the media data and each item of the metadata are provided with one or more notation which is used for clarification among the samples and the items. For example, each sample of the media data can be numbered by Arabic or Roman numerals, or by combination of English alphabet and the numerals. Alternatively, the notation could be any kind of feasible notation known in the field. The notation for each metadata item is in accordance with and indicates a corresponding sample of the media data. However, the metadata is not necessarily from the same data source as the corresponding media data. In other words, the media data and the metadata associated thereto can come from different data sources while the notation for each metadata item might refer to a corresponding sample of the media data. Optionally, each notation for each metadata item can include one or more notation sections, which refer to a common corresponding sample of the media data or to different samples of the media data. Alternatively and/or additionally, the notation sections can refer to and indicate the characteristic of each item of the metadata. The multiple notation sections of one notation for one metadata item might be hierarchical.

Fig. 2 schematically illustrates an apparatus 10 configured to perform the method for managing metadata according to the present invention. The apparatus 10 comprises a displaying unit 14 for displaying a representation for each item of the metadata and for the notation of each item of the metadata. Preferably, the apparatus 10 further comprises a metadata collector 12 for collecting metadata. The metadata collector 12 can collect or retrieve one or a set of metadata item via an input (not shown) or from an information unit 11 either included or not included in the apparatus 10. The information unit 11 can be a storage device, for example, a harddisk or a device for playback of removable storage media. Alternatively, the information unit 11 can be a wired or wireless file-copy or streaming device that provides the required information, i.e. metadata, to the metadata collector 12. Optionally, the apparatus 10 can further comprise an analyzing unit 13, which can, for example, perform an analysis for the collected metadata and generate and produce a representation for the metadata and the notation thereof to the displaying unit 14. Alternatively, the metadata collector 12 and the analyzing unit 13 may be combined into a single processing unit.

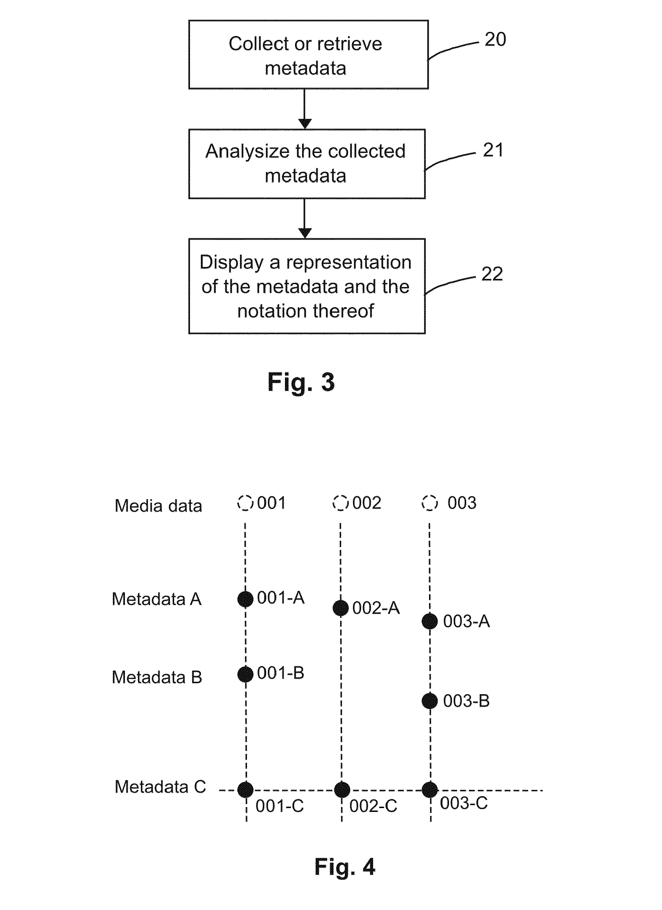

Referring to Fig. 3, the method for managing metadata associated to media data according to the present invention comprises displaying 22 a representation for each item of the metadata and for the notation of each item of the metadata, wherein the representation for the notation is associated to the representation for the corresponding item of the metadata.

As described above, the notation of the each item of the metadata can refer to more than one notation and/or can include multiple notation sections. The representation for the notation can represent all of or only part of the notation of each item of the metadata. Each item of the metadata with at least one common notation is displayed along one of a plurality of lines at one of a plurality of positions, wherein each one position is selected based on the characteristic of the each item of the metadata. Preferably, the method further comprises a step of collecting 20 the metadata associated to the media data. The collection of the metadata can be performed by the metadata collector 12 of the apparatus 10 or by a similar device known in the field. More preferably, the method can further comprise a step of analyzing 21 the collected metadata associated to the media data, which can be performed by the analyzing unit 13 of the apparatus 10 or by a similar device or a processing unit known in the field.

A first preferred embodiment of the method for managing metadata associated to media data according to the present invention is shown in Fig. 4. Three media data sample 001 to 003 and three types A to C metadata are displayed to represent a plurality of media data and metadata. It should be understood by one skilled in the art that the amount of the media data and the metadata to be displayed is not limited. Each item of the metadata is provided with a notation in which the numerals refer to the media data sample and the alphabet refers to the type of the metadata, e.g., the metadata item "001-A" is the type A metadata for media data sample 001. Of course, the notation of each metadata item is not limited and can have any feasible formality. In addition, the metadata item and the corresponding media data can come from a same or different data sources.

In this embodiment, the representation for the metadata is a black dot, and the representation for the notation of each metadata item is the whole text entry of the notation, e.g., 001-A, 002-B, etc. Alternatively, the representation for the metadata can be a square, a triangle, or any other graphical shape; and the representation for the notation is not limited to a text entry, and can, for example, display only part of the notation Of course, the color and the size for the black dot representation can be changed and selected according to users' demand and preference. Preferably, the color and the size of the representation of each item of the metadata are the same. The representation for the notation of each metadata item is associated to the representation for the each corresponding metadata item. Specifically, the text notation is positioned close to, e.g., at the right or left side of, the representation for the corresponding metadata item.

Each item of the metadata that is associated with at least one common notation is displayed along one of a plurality of lines at one of a plurality of positions. Preferably, the at least one common notation corresponds to a same media data sample. For example, in Fig. 4, the three metadata items with the notation "001", which corresponds to media data sample 001, are displayed along one of the vertical dotted lines. The same alignment is applied to the metadata items associated to media data samples 002 and 003. The plurality of lines can be dashed or solid lines, and can be virtual, invisible or visible lines. Also, the plurality of lines can be vertically or horizontally aligned. Optionally, the lines can be curve lines or other type of lines. The position where the metadata items are placed on the plurality of lines is selected according to the characteristic of the metadata. For example, in this embodiment, the type A metadata items are placed on the top of the vertical lines, followed by the type B and type C metadata items. Alternatively, the metadata items could be displayed with the sequence of B-C-A or any other sequence.

Preferably, the position of each item of the metadata on one of the plurality of lines is aligned with the position of each item of the metadata on another of the plurality of lines based on characteristic of the each item of the metadata. Specifically, the metadata items of a same type on different one of the plurality of lines are aligned with each other. As shown in Fig. 4, the type C metadata items for the three media data samples are aligned with each other.

Optionally, a representation for each sample of the media data can be displayed for clarity. Additionally, each sample of the media data can have a notation, for which a representation can also be displayed. The representation for the media data samples can be the same as or different from the representation of the metadata items. Preferably, in the representation, each sample of the media data is displayed along one of the plurality of lines along which is displayed the each item of metadata with the common notation corresponding to the specific sample of the media data. Specifically, referring to Fig. 4, the representation of media data sample 001 is preferably displayed along the same line which the metadata items with the notation "001" are displayed along.

Therefore, based on the method according to this invention, it is easy and convenient for an observer to overview and manage the media data and the metadata. Since the representation is simple and clear, the display space required for the representation of the metadata, optionally of the media data, is reduced. A maximum number of metadata can thus be displayed at a same time and in a same display screen. Moreover, a user can easily and instantly notice the missing metadata item, e.g., "002-B" in Fig. 4, especially when it comes to a huge amount of metadata. This method significantly simplifies the process and saves the time for metadata management.

In addition, the display of a timeline is not necessary for the method according to this invention. As described above, the metadata are managed and displayed based on the notation and the characteristic of the metadata, which means a temporal characteristic for each item of the metadata is not necessarily required. In other words, any type of the metadata, with or without temporal characteristic, can be managed by this method.

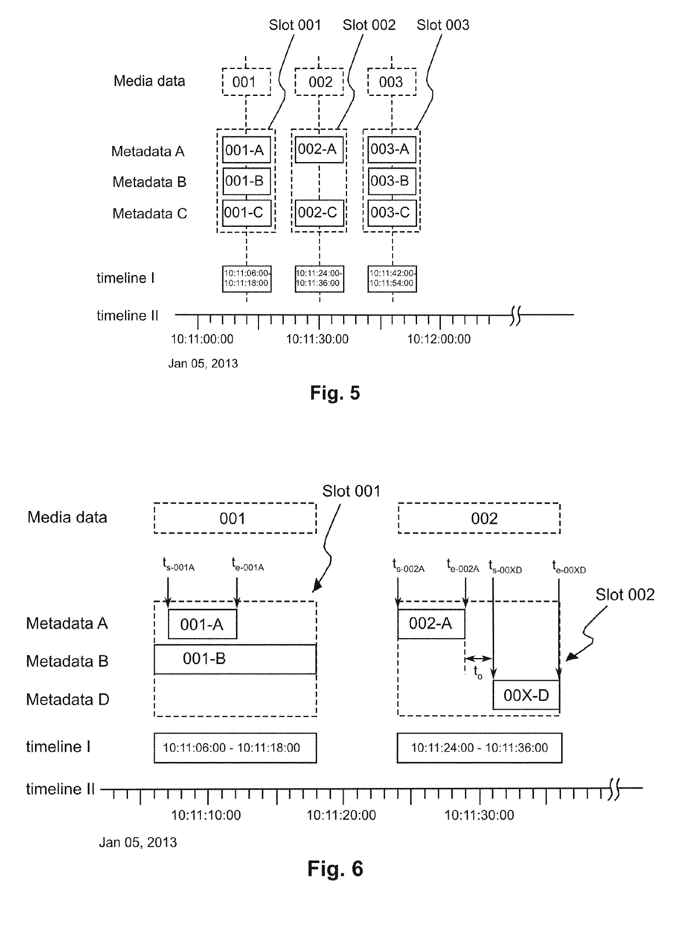

Fig. 5 shows a second preferred embodiment of the method for managing metadata according to the present invention. This embodiment differs from the first preferred embodiment in that the representation of each item of the metadata is a graphical bar, and a timeline is optionally displayed in association to the representation of the metadata. Accordingly, each of the text representations for the notation of the metadata is embedded in the corresponding graphical bar of the corresponding metadata item.

Preferably, the graphical bars for the metadata items of the same type are aligned with each other. For example, the type A metadata items for all the media data samples, i.e. 001-A, 002-A and 003-A, are horizontally aligned with each other. More preferably, each of the graphical bars has a same size and is aligned with each other based on the sides of the graphical bars. A similar representation for the media data samples and the notation of the media data samples can be optionally displayed for clarity.

The representation of the timeline can be optionally a plurality of graphical bars (timeline I in Fig. 5), a continuous line (timeline II in Fig. 5), or any other form known to the one skilled in the art. Preferably, the position of each item of the metadata is aligned with a corresponding position on the timeline based on temporal characteristic of the each item of the metadata, if the metadata item has one. The temporal characteristic of the each item of the metadata can be, for example, start time or end time for the capture of the metadata, or the date or the time duration for the capture.

Preferably, the metadata are managed and displayed based on a slot structure which will be explained in details below. The metadata items associated with at least one common notation or notation section corresponding to a same media data sample are defined as in a same slot. For example, the metadata items 001-A, 001-B, and 001-C are defined to be in slot 001 which corresponds to media data sample 001. The same rule applies to slot 002 for media data sample 002 and slot 003 for media data sample 003.

Each of the slots has temporal characteristics which are defined and/or selected from the temporal characteristics of the metadata items therein. For example, the start time of slot 001 can be selected from one of the start times of metadata items 001-A, 001-B, and 001-C; and the end time of slot 001 can be selected from one of the end times of metadata items 001-A, 001-B, and 001-C. Preferably, the start time of each slot is the earliest start time selected from those of each metadata items in the slot , and the end time of each slot is correspondingly the latest end time selected from those of each metadata items therein. Accordingly, the duration of each of the slots is thus defined by the temporal characteristic of the metadata items therein, rather than directly selected from the durations of the metadata items. Of course, the temporal characteristics of the slots can be defined in any other ways based on users' demand and preference.

Referring to Fig. 5, the displayed temporal characteristic of slot 001 is the capture time starting at 10:11:06:00 and ending at 10:11:18:00, likewise, 10:11:24:00-10:11:36:00 and 10:11:42:00-10:11:54:00 for slots 002 and 003. Preferably, the metadata items in a same slot, which are defined to be associated with at least one common notation or notation section corresponding to a same media data sample here, are aligned with a same corresponding position on the timeline in accordance to the temporal characteristic of the slot. For example, the three slots are aligned appropriately with timeline I or II on a temporal order according to the capture time thereof. In association to the timeline I that is composed of a plurality of graphical bars, each of the slots is aligned with one of the graphical bars of the timeline I, and the capture time of each slot is displayed by the Arabic numerals embedded in the graphical bars. In association to the timeline II that is a continuous line, each slot is displayed as a set of graphical bars where the start and the end of the graphical bars align with the start time and the end time of the slot. For example, for the slot 001, the start of the graphical bars aligns with the 10:11:06:00 mark, and the end of the graphical bars aligns with the 10:11:18:00 mark.

Since the metadata is aligned with the timeline based on the temporal characteristic of the slot rather than those of each individual metadata item, the metadata without temporal characteristic can also be displayed in accordance to the notation of the metadata item. In other words, according to the method of the present invention, each metadata item with or without a temporal characteristic can be displayed and managed at once, even when a timeline is used and displayed. The management of metadata thus becomes more thorough and convenient.

Additionally and/or alternatively, the slot structure described above can also be utilized based on the temporal characteristic of the metadata, of which an exemplary is illustrated in Fig. 6. The metadata items that are correlated temporally and have temporal characteristic slightly different, e.g., within a predetermined tolerance, are defined in a same slot. It should be noted that the slot structure in Fig. 6 is used only for explaining the concept and is optionally displayed and visible to a user. In other words, there might be a circumstance that a user only sees the resulted slot structure as shown in Fig. 5, but not see the structure in Fig. 6 which can, for example, happen during the analyzing process in the apparatus 10.

In Fig. 6, the start time ($t_s$) and the end time ($t_e$) for each metadata item are shown to be a representation for the temporal characteristic thereof. The tolerance to, which for example is defined as a time duration, is a predetermined parameter that can be adjusted and modified according to users' preference. Based on the tolerance, a metadata item 00X-D, which with an insufficient or unclear notation, can also be managed into the slot structure.

In this exemplary, the metadata items that have a start time and/or end time close to one another are defined in the same slot. In specific, every metadata item that has a start time ($t_s$) and an end time ($t_e$) defined as the following are assigned in the slot 002.

$$t_s \leq t_{e\text{-}002A} + t_0$$

$$t_{s\text{-}002A} \leq t_e + t_0$$

The metadata item 00X-D has the start time and the end time fitting the above rules, thus it can be defined and managed in the slot 002. Of course, besides the metadata item 002-A, any other metadata item can be alternatively or additionally used as the reference item. In addition, any other temporal characteristic of the metadata can be used for defining and managing the metadata.

According to the method of this invention as described above, the metadata can be managed based on the notation of the metadata associated to media data, additionally on the temporal characteristic of the metadata. A timeline can be optionally used and displayed for the management. In addition, a slot structure associated with the notation or the temporal characteristic of the metadata can also be used. The management of the metadata is thus improved and become more thorough and flexible.

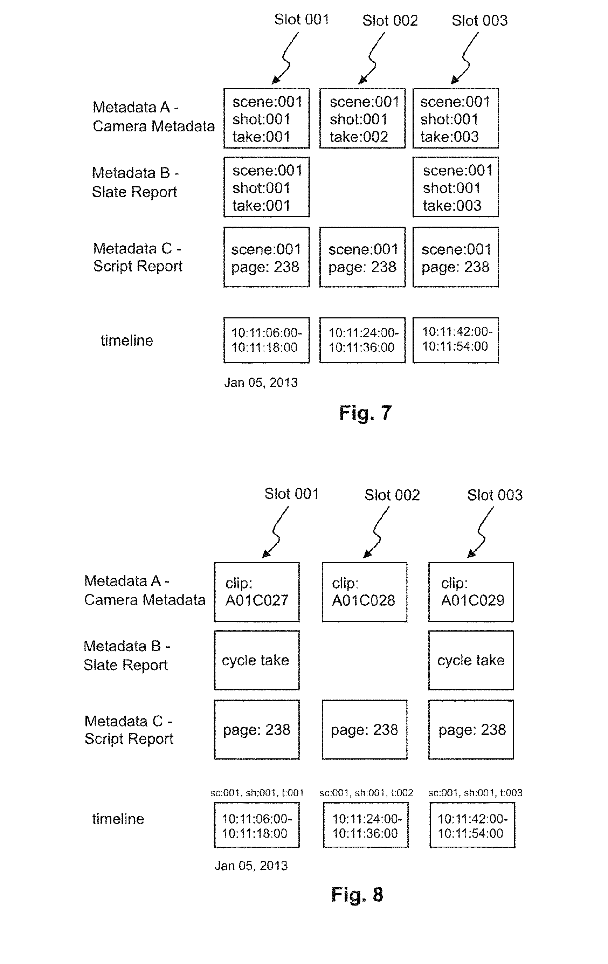

Fig. 7 schematically illustrates an application of the method of managing metadata according to the present invention for film production. The three representing types of metadata shown in the figure are camera metadata, slate report, and script report. For the metadata of camera metadata and slate report, the notation of each item of the metadata includes three hierarchical notation sections, i.e. numbers of scene, shot, and take. For the metadata of script report, the notation thereof indicates the number of the scene and the page of the script which are not temporal or time-related. Since the displayed metadata refer to the media data that are various takes for the same scene and same shot, the type C metadata, i.e. the script report, for the various takes is the same. As described above, the metadata and the media data can come from different data sources and can have different data formalities, i.e. the media data is a video data and the type C metadata is the script report as a text data. Each of the graphical bars representing one metadata item is aligned with each other based on the same notation of the metadata and the characteristic of the metadata. The representation for the timeline is a plurality of graphical bars having the same size as those representing the metadata items. The metadata items are aligned with a corresponding position on the timeline based on the temporal characteristics of the slots 001, 002 and 003 corresponding to individual media data.

Fig. 8 shows another example for the representation for the notation of metadata items shown in Fig. 6. The notation of each of the metadata items includes other notation sections, for example, clip name for the camera metadata, page number for the script report, and the mark of "cycle take" for the slate report. In this example, the above mentioned notation sections are displayed and embedded in the corresponding graphical bars for each metadata item, replacing the redundant information and notation for the number of scene, shot and take associated to each metadata item. The notation sections about scene, shot and take are summarized below and assigned to each of the slots, which corresponds to one of the media data sample (not shown). This exemplary representation simplifies the representation for the notation of each metadata item and thus makes the management of the metadata become clearer and easier. Of course, it should be understood that the representation for the notation of the metadata and for the metadata itself are flexible and can be adjusted according to users' demand and preference.

In Figs. 7 and 8, with the help of the method for managing metadata according to the present invention, a user can instantly notice that the type B metadata, i.e. the slate report, for the take 002 is missing. When one deals with a huge amount of media data and metadata during film production, the method of this invention can significantly improve the efficiency of metadata management. In addition, a user is provided with more flexibility that he or she can decide whether to display a timeline according to his/her own needs. The metadata items can be managed and displayed based on the notation and the characteristic thereof, additionally or alternatively based on a temporal order with a timeline. Regardless of the use of a timeline, all of the metadata items with or without a temporal characteristic can be appropriately displayed at the same time.

The method according to the present invention can also be applied to other industrial production processes or machines where the related information needed to be organized according to the informational characteristics. In other words, the idea of information management based on the "slot" type structure is applicable to other industrial purposes. Especially, the method is applicable to the parallel processes or machines that are either registered to or controlled with a time-code or wall-clock system. These processes or machines generates data events or files when reporting about started and finished process cycles with respect to a time-code or wall-clock system. As previously described, the management of the the data events or files can be optionally associated with a timeline such that they can be displayed and managed in a simple and convenient way.

**Claims**

1. A method for managing metadata associated to media data, each item of the metadata being provided with at least one notation in accordance with a corresponding sample of the media data, the method comprising:

   displaying (22) a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

2. The method of claim 1, wherein the position of each item of the metadata on one of the plurality of lines is aligned with the position of each item of the metadata on another one of the plurality of lines based on characteristic of the each item of the metadata.

3. The method of claim 1, wherein the representation of each item of the metadata is a dot or a graphical bar.

4. The method of claim 3, wherein the representation of each item of the metadata is a dot having a same size or a graphical bar having a same size.

5. The method of claim 1, wherein the representation of the at least one notation is a text entry.

6. The method of claim 1, further comprising displaying a timeline in associated to the representation of the metadata.

7. The method of claim 6, wherein the timeline is represented by a continuous line or by a plurality of graphical bars.

8. The method of claim 6, wherein the position of each item of the metadata is aligned with a corresponding position on the timeline based on temporal characteristic of the each item of the metadata.

9. The method of claim 6, wherein each item of the metadata with at least one common notation is aligned with a same corresponding position on the timeline based on temporal characteristic of these each item of the metadata with at least one common notation.

10. The method of claim 1, further comprising displaying a representation for each sample of the media data, wherein each sample of the media data is displayed along one of the plurality of lines, along which is displayed the each item of the metadata with the at least one common notation corresponding to the said sample of the media data.

11. The method of claim 1, wherein each item of the metadata comprises camera metadata, a slate report, or a script report.

12. The method of claim 1, further comprising collecting (20) the metadata associated to the media data.

13. The method of claim 12, further comprising analyzing (21) the collected metadata associated to the media data.

14. An apparatus (10) configured to manage metadata associated to media data, each item of the metadata being provided with at least one notation in accordance with a corresponding sample of the media data, the apparatus comprising:

    a displaying unit (14) for displaying a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

15. The apparatus of claim 14, further comprising a metadata collector (12) for collecting metadata.

16. A computer readable medium having stored therein instructions for managing metadata associated to media data, each item of the metadata being provided with at least one notation in accordance with a corresponding sample of the media data, which when executed by a computer, cause the computer to:

    display a representation for each item of the metadata and for the at least one notation of each item of the metadata, wherein the representation for the at least one notation is associated to the representation for the corresponding item of the metadata, and wherein each item of the metadata with at least one common notation is displayed along one of a plurality of lines at one of a plurality of positions, each one position being selected based on the characteristic of the each item of the metadata.

| Media data | 001 | 002 |
|---|---|---|
| Metadata A | 001-A | 002-A |
| Metadata B | 001-B | 002-B |
| Metadata C | | 002-C |

timeline

10:11:00:00          10:11:20:00          10:11:30:00

Jan 05, 2013

**Fig. 1**
PRIOR ART

10

11        12        13        14

**Fig. 2**

```
┌─────────────────────────┐
│   Collect or retrieve   │──── 20
│        metadata         │
└─────────────────────────┘
             │
             ▼
┌─────────────────────────┐
│  Analysize the collected │──── 21
│        metadata         │
└─────────────────────────┘
             │
             ▼
┌─────────────────────────┐
│  Display a representation │──── 22
│  of the metadata and the │
│     notation thereof    │
└─────────────────────────┘
```

**Fig. 3**

Media data    ◌ 001    ◌ 002    ◌ 003

Metadata A    ● 001-A    ● 002-A    ● 003-A

Metadata B    ● 001-B

   ● 003-B

Metadata C    ● 001-C    ● 002-C    ● 003-C

**Fig. 4**

**Fig. 5**

**Fig. 6**

Slot 001    Slot 002    Slot 003

| | Slot 001 | Slot 002 | Slot 003 |
|---|---|---|---|
| Metadata A - Camera Metadata | scene:001 shot:001 take:001 | scene:001 shot:001 take:002 | scene:001 shot:001 take:003 |
| Metadata B - Slate Report | scene:001 shot:001 take:001 | | scene:001 shot:001 take:003 |
| Metadata C - Script Report | scene:001 page: 238 | scene:001 page: 238 | scene:001 page: 238 |
| timeline | 10:11:06:00- 10:11:18:00 | 10:11:24:00- 10:11:36:00 | 10:11:42:00- 10:11:54:00 |

Jan 05, 2013

## Fig. 7

Slot 001    Slot 002    Slot 003

| | Slot 001 | Slot 002 | Slot 003 |
|---|---|---|---|
| Metadata A - Camera Metadata | clip: A01C027 | clip: A01C028 | clip: A01C029 |
| Metadata B - Slate Report | cycle take | | cycle take |
| Metadata C - Script Report | page: 238 | page: 238 | page: 238 |
| | sc:001, sh:001, t:001 | sc:001, sh:001, t:002 | sc:001, sh:001, t:003 |
| timeline | 10:11:06:00- 10:11:18:00 | 10:11:24:00- 10:11:36:00 | 10:11:42:00- 10:11:54:00 |

Jan 05, 2013

## Fig. 8

Europäisches
Patentamt

European
Patent Office

Office européen
des brevets

# EUROPEAN SEARCH REPORT

Application Number

EP 13 18 1960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COSTA M, CORREIA N, GUIMARAES N: "Annotations as Multiple Perspectives of Video Content", ACM, 2 PENN PLAZA, SUITE 701 - NEW YORK USA, 1 December 2002 (2002-12-01), XP040145745, * abstract * * section 5 * * figures 2,3 * | 1-16 | INV. H04N21/431 H04N21/84 |
| X | US 6 463 444 B1 (JAIN RAMESH [US] ET AL) 8 October 2002 (2002-10-08) * column 4, line 13 - column 7, line 8 * * figures 1-9 * | 1,14,16 | |
| A | CASARES J., ET.AL.: "Simplifying Video Editing Using Metadata", ACM, 2 PENN PLAZA, SUITE 701 - NEW YORK USA, 25 June 2002 (2002-06-25), XP040150607, * abstract * * figures 1-5 * | 1-16 | |
| A | WO 2013/040244 A1 (SONY CORP [JP]; SONY PICTURES TECHNOLOGIES INC [US]; BRAHMS JASON [US]) 21 March 2013 (2013-03-21) * abstract * * figure 2 * | 1-16 | TECHNICAL FIELDS SEARCHED (IPC) H04N |

The present search report has been drawn up for all claims

| Place of search | Date of completion of the search | Examiner |
|---|---|---|
| The Hague | 30 January 2014 | Arpaci, Mutlu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 13 18 1960

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2014

| Patent document cited in search report | | Publication date | Patent family member(s) | Publication date |
|---|---|---|---|---|
| US 6463444 | B1 | 08-10-2002 | NONE | |
| WO 2013040244 | A1 | 21-03-2013 | NONE | |

EPO FORM P0459

For more details about this annex : see Official Journal of the European Patent Office, No. 12/82